Europäisches Patentamt

European Patent Office

Office européen des brevets

(19)

(11) Publication number: **0 218 291 B1**

# EUROPEAN PATENT SPECIFICATION

(12)

(45) Date of publication of patent specification: **27.03.91**    (51) Int. Cl.5: **H04N 5/232**

(21) Application number: **86201645.8**

(22) Date of filing: **23.09.86**

(54) Television camera having an electronic viewfinder.

(30) Priority: **26.09.85 NL 8502623**

(43) Date of publication of application:
**15.04.87 Bulletin 87/16**

(45) Publication of the grant of the patent:
**27.03.91 Bulletin 91/13**

(84) Designated Contracting States:
**DE FR GB IT NL**

(56) References cited:
**US-A- 3 435 136**

**PATENT ABSTRACTS OF JAPAN, vol. 7, no. 258 (E-211)[1403], 17th November 1983 & JP-A-58-142 681**

**PATENT ABSTRACTS OF JAPAN, vol. 5, no. 66 (E-55)[738], 2nd May 1981 & JP-A-56-14 781**

**FUNKSCHAU, vol. 48, no. 5, February 1976, pages 171-173, Munich, DE; G.KROLL et al.: "Digitales Abstimmsystem für Fernsehempfänger"**

(73) Proprietor: **N.V. Philips' Gloeilampenfabrieken**
**Groenewoudseweg 1**
**NL-5621 BA Eindhoven(NL)**

(72) Inventor: **Hamering, Johannes Gerrit c/o Int. Octrooibureau**
**Prof. Holstlaan 6**
**NL-5656 AA Eindhoven(NL)**

(74) Representative: **Kooiman, Josephus Johannes Antonius et al**
**INTERNATIONAAL OCTROOIBUREAU B.V.**
**Prof. Holstlaan 6**
**NL-5656 AA Eindhoven(NL)**

## Description

The invention relates to a television camera having an electronic viewfinder, with setting information about a setting at the camera being displayed on a viewfinder display screen outside a viewfinder image to be picked up as disclosed in JP-A-5814268 and to the logarithmic sound signal processing.

Another television camera of this type is known from United States Patent 3,435,136. The Patent describes that the diaphragm aperture and the focal length of the lens can be set by the camera operator and displayed as setting information on the viewfinder display screen. The setting information is present on the screen in the form of a luminescing square which is movable along a scale. This gives the camera operator the lens setting information to be readjusted if required without having to look away from the viewfinder image with the scene to he picked up by the camera.

It is an object of the invention to realize a television camera in which the camera operator can observe a different setting information on the viewfinder display screen with a variation adapted to the information.

To this end a television camera according to the invention having a displayed setting information relating to the sound recording level at which the sound associated with a scene to be picked up is recorded and processed by a camera microphone circuit, is characterized in that the strength of the sound recording level is being displayed in the form of a length-variable bar having a logarithmic variation, the camera including a sound signal peak detection circuit an output of which is coupled to an input of a signal comparison circuit, another input of which is coupled to an output of a logarithmic voltage generator for supplying a voltage logarithmically varying over a part of a line period, an output of the signal comparison circuit being coupled to an input of a gating circuit another input of which is coupled to an output of a line selection circuit for selecting at least one television line per field period, an output of the gating circuit for the supply of a sound recording level indication signal being coupled to an input of a signal combination circuit another input of which receives a picture or video signal to be displayed by the viewfinder, an output of the signal combination circuit carrying the picture or video signal and the sound recording level indication signal being coupled to an input of the viewfinder.

From the article "Digitales Abstimmsystem für Fernsehempfänger" by G. Kroll et al., published in "Funkschau", Vol. 48, No. 5, February 1976, pages 171-173, Munich, DE, a television receiver is on itself known, in which setting information relating to the sound reproduction level in the form of a length variable bar is displayed on the picture screen within the television image.

The invention is, however, based on the recognition that the viewfinder display screen of a television camera is sufficiently greater than the viewfinder image itself to display the sound recording level in the form of a length variable bar on the part of the viewfinder display screen outside the viewfinder image.

By appling the beforementioned measure according to the invention such sound recording level bar is obtained with simple and eventually analog circuitry.

A camera embodiment giving a clear setting information on the viewfinder display screen is characterized in that the sound recording level bar comprises corresponding parts of two consecutive television lines per picture or frame.

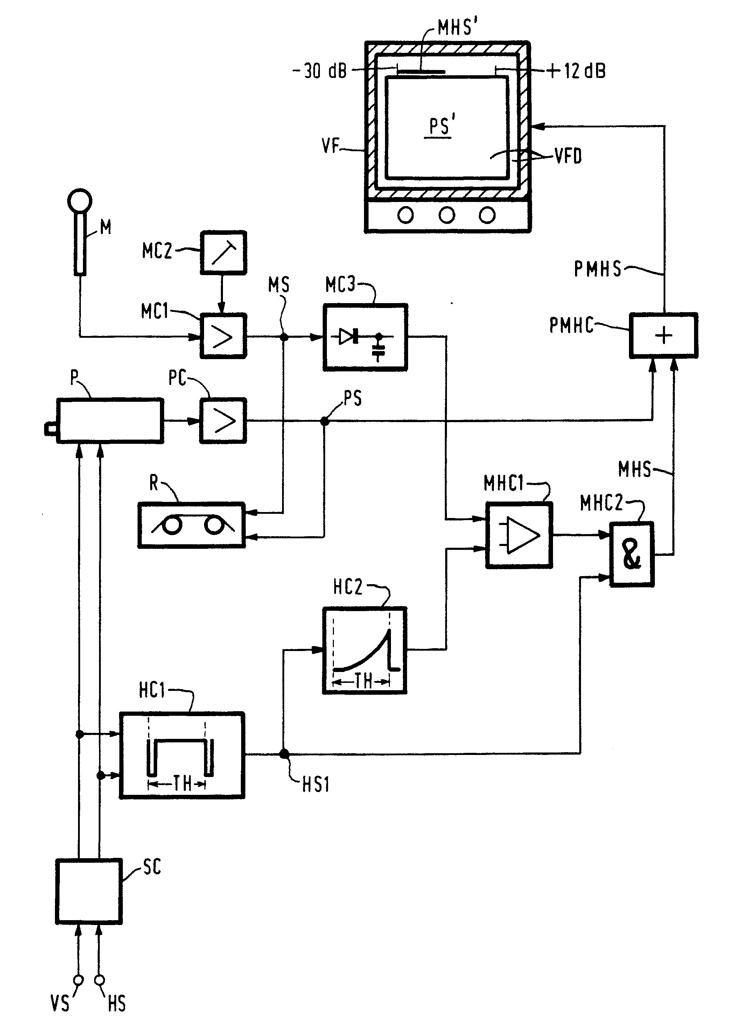

The invention will be further described by way of example with reference to the accompanying drawing of a television camera according to the invention, shown in a block diagram.

In the drawing the reference P denotes an image sensor and M denotes a microphone which form part of a television camera as picture imaging and sound pick-up devices. The camera may be suitable for black-white television or colour television, with interlaced or non-interlaced television fields per frame or picture. The image sensor P may be formed with a single or several imaging devices constructed as an imaging tube or a solid-state image sensor. Independent of the choice it is assumed that the image sensor P operates with television rasters built up from lines under the control of a field and line signal generator SC. For synchronizing purposes a field or a line synchronizing signal VS or HS is applied to the generator SC. A picture or video signal PS is available in the camera for further signal processing via a signal amplifier PC coupled to a picture or video signal output of the image sensor P. The signal PS comprises picture information PS' to be displayed and field and line synchronizing and blanking information in the case of a video signal structure. The signal PS is a single picture signal or a composite video signal. The video signal indication will further be used in the course of this description.

The microphone M is shown diagrammatically by means of a single microphone but in the case of stereo sound recording there may be two or more. The microphone M is succeeded by a sound signal amplifier MC1 which supplies a sound signal MS at an output. The sound recording level during sound recording is controlled at the amplifier MC1 by using a sound control member MC2. The sound control member MC2 can be operated by a cameraman, so that a camera microphone circuit (M, MC1, MC2) supplies the sound signal MS at the desired sound level.

The signals PS and MS are applied in the camera to a signal storage and reproducing device R which may accommodate a tape or a record for this purpose. The presence of the device R in the camera leads to a construction as a television camera recorder.

Furthermore an electronic viewfinder VF forms part of the camera. A display screen is denoted by VFD on which a viewfinder image with the picture information PS' and a setting information MHS' occurring outside this viewfinder image are diagrammatically shown. The setting information MHS' is shown as a bar which luminesces against a dark background and extends in the television line scan direction, i .e . ¨ the horizontal direction from a (-30 dB) left-hand indication into the direction of a ( + 12 dB) right-hand indication. The control range of 42 dB is associated with the sound recording level control at the camera microphone circuit (M, MC1, MC2) by means of the sound control member MC2.

To obtain the setting information on the viewfinder screen VFD in the form of the sound recording level bar MHS', the camera has the following structure. The sound signal MS is applied via a sound signal peak detection circuit MC3 to an input of a signal comparison circuit MHC1. To clarify the operation of the circuit MC3, a diode and a subsequent capacitor ensuring the peak rectification are shown in this circuit by way of example. The charge time constant in the capacitor is assumed to be smaller than the discharge time constant. The circuit MC3 supplies a signal at the maximum sound level which follows enlargements quickly and diminutions more slowly, which leads in practice to an ultimately displayed setting information MHS' with a restful impression for the camera operator.

The outputs of the field and line signal generator SC are coupled to inputs of a line selection circuit HC1 in which a line signal is shown with a television line period TH. It is assumed that the line selection circuit HC1 selects one line per field period and, for example, the last line which occurs in the television field blanking period. The reference HS1 denotes the line selection signal which is applied on the one hand to an input of a logarithmic voltage generator HC2 and on the other hand to an input of a gating circuit MHC2. A voltage curve increasing logarithmically over a part of the line period TH is diagrammatically shown at the generator HC2. The signal comparison circuit MHC1 is shown with an amplifier having two inputs, it being assumed that the output of the circuit MHC1 supplies a higher voltage corresponding to a logic 1 when the voltage at the output of the circuit MC3 is higher than that at the output of the generator HC2. During the selected line period TH the output voltage of the logarithmic voltage generator HC2 increases and the comparison circuit MHC1 supplies a lower voltage corresponding to a logic 0 as from the instant when the voltage passes the voltage value at the output of the sound signal peak detection circuit MC3. The output of the circuit MHC1, initially with the logic 1 and after some time the logic 0 dependent on the value of the maximum sound level, is coupled to an input of a gating circuit MHC2. A further input of the gating circuit MHC2 is coupled to the output of the line selection circuit HC1. It has been indicated at the gating circuit MHC2 that it operates with a logic AND function so that, starting from the voltage values described and shown, the output of the gating circuit MHC2 initially conveys a logic 1 during the selected line period and subsequently conveys a logic 0 dependent on the maximum sound level. The circuit MHC2 thereby supplies a sound recording selection indication signal MHS.

The output of the gating circuit MHC2 with the signal MHS is coupled to an input of a signal combination circuit PMHC, another input of which is coupled to the output of the signal amplifier PC supplying the video signal PS. The signal combination circuit PMHC shown as an adder circuit supplies a combination signal PMHS which is applied to the viewfinder VF. Consequently the viewfinder image with the picture information PS' and the setting information, which is located outside this image and has the form of the sound recording level bar MHS' luminescing against a dark background, is obtained on the viewfinder screen VFD.

It is found in practice that it is sufficient to form the sound recording level bar MHS' from two consecutive television lines per interlaced picture or frame. If more television lines are used to obtain a greater bar width, the line selection signal HS1 should comprise as many line periods TH of the last, the last but one, etc. line of the field blanking period.

The display on the viewfinder screen VFD of the sound recording level in the form of the bar MHS' gives an optimum presentation of this level on the one hand and further camera setting information components in the form of the luminescing squares may be displayed in known manner on the other hand. The optimum presentation of the sound recording level is obtained by the bar length variation having the logarithmic variation. In the given embodiment of the camera the logarithmically varying bar length variation is given with respect to the maximum sound level. Instead, the variation could be presented with respect to the average sound level, it being possible to replace the signal peak detection circuit MC3 by a signal-integrating circuit. In practice the presentation of the maximum sound level as setting information appears to be preferred.

## Claims

1. A television camera having an electronic viewfinder (VF), with setting information about a setting at the camera being displayed on a viewfinder display screen (VFD), outside a viewfinder image (PS') to be picked up, the displayed setting information being related to the sound recording level at which the sound associated with the scene to be picked up is recorded and processed by a camera microphone circuit (M, MC1, MC2), characterized by the strength of the sound recording level being displayed in the form of a length-variable bar (MHS') having a logarithmic variation, the camera including a sound signal peak detection circuit (MC3) an output of which is coupled to an input of a signal comparison circuit (MHC1) another input of which is coupled to an output of a logarithmic voltage generator (HC2) for supplying a voltage logarithmically varying over a part of a line period (TH), an output of the signal comparison circuit (MHC1) being coupled to an input of a gating circuit (MHC2) another input of which is coupled to an output of a line selection circuit (HC1) for selecting at least one television line per field period, an output of the gating circuit (MHC2) for the supply of a sound recording level indicating signal being coupled to an input of a signal combination circuit (PMHC) another input of which receives a picture or video signal to be displayed by the viewfinder (VF), an output of the signal combination circuit (PMHC) carrying the picture or video signal and the sound recording level indication signal being coupled to an input of the viewfinder (VF).

2. A television circuit as claimed in Claim 1, characterized in that the sound recording level bar (MHS') comprises corresponding parts of two consecutive television lines per picture of frame.

## Revendications

1. Caméra de télévision comportant un viseur électronique (VF), de l'information de réglage portant sur un réglage de la caméra étant affichée sur un écran d'affichage de viseur (VFD) en dehors d'une image de viseur (PS') à capter, l'information de réglage affichée se rapportant au niveau d'enregistrement sonore auquel le son associé à la scène à capter est enregistré et traité par un circuit de microphone de caméra (M, MC1, MC2), caractérisée en ce que l'intensité du niveau d'enregistrement sonore est affichée sous la forme d'une barre de longueur variable (MHS') à variation logarithmique, la caméra comprenant un circuit de détection de crête de signal son (MC3), dont une sortie est couplée à une entrée d'un circuit de comparaison de signaux (MHC1), dont une autre entrée est couplée à une sortie d'un générateur de tension logarithmique (HC2) destiné à fournir une tension à variation logarithmique sur une partie d'une période de ligne (TH), une sortie du circuit de comparaison de signaux (MHC1) étant couplée à une entrée d'un circuit à effet de porte (MHC2), dont une autre entrée est couplée à une sortie d'un circuit de sélection de ligne (HC1) pour sélectionner au moins une ligne de télévision par période de trame, une sortie du circuit à effet de porte (MHC2) pour la fourniture d'un signal d'indication de niveau d'enregistrement sonore étant couplée à une entrée d'un circuit de combinaison de signaux (PMHC), dont une autre entrée reçoit un signal d'image ou vidéo à afficher par le viseur(VF), une sortie du circuit de combinaison de signaux (PMHC) portant le signal d'image ou vidéo et le signal d'indication de niveau d'enregistrement sonore étant couplée à une entrée du viseur (VF).

2. Circuit de télévision suivant la revendication 1, caractérisé en ce que la barre de niveau d'enregistrement sonore (MHS') comprend des parties correspondantes de deux lignes de télévision successives par image ou trame.

## Ansprüche

1. Fernsehkamera mit einem elektronischen Sucher (VF), wobei an einem Wiedergabeschirm (VFD) des Suchers Einstellinformation in bezug auf eine Einstellung der Kamera außerhalb eines aufzunehmenden Bildes (PS') wiedergegeben wird, wobei die wiedergegebene Einstellinformation sich auf die Lautstärke bezieht, mit der bei der aufzunehmenden Szene gehörende Ton von einer Kameramikrophonschaltung (M, MC1, MC2) aufgenommen und verarbeitet wird, **dadurch gekennzeichnet,** daß die Höhe des Tonaufnahmepegels in Form eines in der Länge schwankenden Balkens (MHS') mit logarithmischem Verlauf wiedergegeben wird, wobei die Kamera mit einer Tonsignalspitzendetektionsschaltung (MC3) ausgebildet ist, von der ein Ausgang mit einem Eingang einer Signalvergleichsschaltung (MHC1) gekoppelt ist, von der ein anderer Eingang mit einem Ausgang eines logarithmischen Spannungsgenerators (HC2) zum Liefern einer über einen Teil einer Horizontal-Periode (TH) sich logarithmisch ändernden Spannung gekoppelt ist, wobei ein Ausgang der Signalvergleichsschaltung (MHC1) mit einem Eingang einer Torschaltung (MHC2) gekoppelt ist, wobei ein anderer Eingang mit einem Ausgang einer Horizontal-Selektionsschaltung (HC1) zum Selektieren mindestens einer Fernsehzeile je Vertikal-Periode gekoppelt ist, wobei ein Ausgang der Torschaltung (MHC2) zum Liefern eines Tonaufnahmestärke-Anzeigesignals mit einem Eingang einer Signalkombinierschaltung (PMHC) gekoppelt ist, wobei einem anderen Eingang derselben ein vom Sucher (VF) wiederzugebendes Bild- bzw. Video-Signal zugeführt wird, wobei ein Ausgang der Signalkombinierschaltung, der das Bild- bzw. Video-Signal und das Tonaufnahmestärke-Anzeigesignal führt, mit einem Eingang des Suchers (VF) gekoppelt ist.

2. Fernsehschaltung nach Anspruch 1, **dadurch gekennzeichnet,** daß der Tonaufnahmestärke-Balken (MHS') entsprechende Teile zweier aufeinanderfolgender Fernsehzeilen je Bild umfaßt.